(19) Europäisches Patentamt
European Patent Office
Office européen des brevets

(11) **EP 3 557 239 A1**

(12) **EUROPEAN PATENT APPLICATION**

(43) Date of publication:
**23.10.2019 Bulletin 2019/43**

(51) Int Cl.:
***G01N 27/407*** (2006.01)

(21) Application number: **19169524.6**

(22) Date of filing: **16.04.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.04.2018 US 201815956059**

(71) Applicant: **Delphi Technologies IP Limited Saint Michael (BB)**

(72) Inventors:
• **SOLANSKEY, Ross J.**
**Berkley, Michigan 48072 (US)**
• **COVARRUBIAS, Alfredo I.**
**Oxford, Michigan 48371 (US)**
• **RAMIREZ, Daniel**
**Auburn Hills, Michigan 48326 (US)**

(74) Representative: **Delphi France SAS c/o Delphi Technologies Campus Saint Christophe Bâtiment Galilée 2 10, avenue de l'Entreprise 95863 Cergy Pontoise Cedex (FR)**

(54) **GAS SENSOR**

(57) A gas sensor (10) includes a sensing element (44) having an electrochemical cell (138) and a reference gas channel (152) in fluid communication with a reference electrode (134). A shield (86) of the gas sensor (10) is made of a metal material, the shield (86) being hollow such that a chamber (119) is located within the shield (86) and such that the shield (86) has an inner surface (86a) and an outer surface (86b), the electrochemical cell (138) being located outside of the chamber (119) and the reference gas channel (152) being in fluid communication with the chamber (119) which provides fluid communication from the chamber (119) to the reference electrode (134). The shield (86) has a reference gas aperture (86c) extending through the metal material from the outer surface (86b) to the inner surface (86a) such that the reference gas aperture (86c) permits a refence gas to flow into the chamber (119) while preventing liquid water from entering the chamber (119).

FIG. 1

EP 3 557 239 A1

Description

**TECHNICAL FIELD OF INVENTION**

The present invention relates to a gas sensor, more particularly to such a gas sensor with a sensing element which has a sensing electrode to be exposed to a gas which is to be sensed and a reference electrode to be exposed to atmospheric air which is to be used as a reference gas.

**BACKGROUND OF INVENTION**

The automotive industry has used exhaust gas sensors in automotive vehicles for many years to sense the composition of exhaust gases, namely, the concentration of oxygen in the exhaust gases. For example, a sensor is used to determine the exhaust gas content for alteration and optimization of the air to fuel ratio for combustion.

One type of sensor uses an ionically conductive solid electrolyte between porous electrodes. For oxygen, solid electrolyte sensors are used to measure oxygen activity differences between an unknown gas sample and a known gas sample. In the use of a sensor for automotive exhaust, the unknown gas is exhaust and the known gas, i.e. reference gas, may be atmospheric air because the oxygen content in air is relatively constant and readily accessible. This type of sensor is based on an electrochemical galvanic cell operating in a potentiometric mode to detect the relative amounts of oxygen present in an automobile engine's exhaust. When opposite surfaces of this galvanic cell are exposed to different oxygen partial pressures, an electromotive force ("emf') is developed between the electrodes according to the Nernst equation.

With the Nernst principle, chemical energy is converted into an electromotive force. A gas sensor based upon this principle typically consists of an ionically conductive solid electrolyte material, a porous electrode with a porous protective overcoat exposed to exhaust gases ("exhaust gas electrode"), and a porous electrode exposed to a known gas' partial pressure ("reference electrode"). Sensors typically used in automotive applications use a yttria stabilized zirconia based electrochemical galvanic cell with porous platinum electrodes, operating in potentiometric mode, to detect the relative amounts of a particular gas, such as oxygen for example, that is present in an automobile engine's exhaust. Also, a typical sensor has a ceramic heater attached to help maintain the sensor's ionic conductivity. When opposite surfaces of the galvanic cell are exposed to different oxygen partial pressures, an electromotive force is developed between the electrodes on the opposite surfaces of the zirconia wall, according to the Nernst equation:

$$ E = \left( \frac{-RT}{4F} \right) \ln \left( \frac{P_{O_2}^{ref}}{P_{O_2}} \right) $$

where:

E = electromotive force;

R = universal gas constant;

F = Faraday constant; and

T = absolute temperature of the gas.

Due to the large difference in oxygen partial pressure between fuel rich and fuel lean exhaust conditions, the electromotive force (emf) changes sharply at the stoichiometric point, giving rise to the characteristic switching behavior of these sensors. Consequently, these potentiometric oxygen sensors indicate qualitatively whether the engine is operating fuel-rich or fuel-lean, conditions without quantifying the actual air-to-fuel ratio of the exhaust mixture.

For example, an oxygen sensor, with a solid oxide electrolyte such as zirconia, measures the oxygen activity difference between an unknown gas and a known reference gas. Usually, the known reference gas is the atmosphere air while the unknown gas contains the oxygen with its equilibrium level to be determined. Typically, the sensor has a built-in reference gas channel which connects the reference electrode to the ambient air. Since the oxygen sensor is typically mounted on the vehicle in a location that may be exposed periodically to water in use, for example water that splashes up from the road in wet environments, measures must be taken to prevent the water from reaching the sensing element since water may result in undesired operation. One typical way to provide air is to provide a passage through a shield which defines a chamber with which the reference gas channel is in fluid communication and applying a breathable membrane over the passage which allows air to pass therethrough while preventing water from passing therethrough. One example of a breathable membrane is shown in US Patent No. 6,395,159 to Matsuo et al. where the breathable membrane is illustrated as filter 53 made of a porous fiber structure. While using a breathable membrane is effective, the breathable membrane is an expensive element of the gas sensor due to the characteristics the breathable membrane must provide.

What is needed is a gas sensor which minimizes or eliminates one or more of the shortcomings as set forth above.

**SUMMARY OF THE INVENTION**

Briefly described, a gas sensor is provided which may include a sensing element having an electrochemical cell comprising a solid electrolyte layer disposed between a sensing electrode and a reference electrode, the sensing element may also have a reference gas channel in fluid communication with the reference electrode; and a shield made of a metal material, the shield being hollow such that a chamber is located within the shield and such that the shield has an inner surface and an outer surface, the sensing electrode and the reference electrode being located outside of the chamber and the reference gas channel being in fluid communication with the chamber which may provide fluid communication from the chamber to the reference electrode, the shield having a reference gas aperture extending through the metal material from the outer surface to the inner surface such that the reference gas aperture is configured to permit a refence gas to flow into the chamber while preventing liquid water from entering the chamber.

The gas sensors may have the reference gas channel located within the chamber.

The gas sensors reference gas aperture may be less than or equal to 1100 $\mu$m in diameter.

The gas sensors reference gas aperture may be less than or equal to 275 $\mu$m in diameter.

The gas sensors reference gas aperture may extend through the metal material along an axis and the reference gas aperture may have a maximum width that is less than or equal to 1100 $\mu$m in a direction perpendicular to the axis.

The maximum width of the gas sensor may be less than or equal to 275 $\mu$m.

The reference gas aperture of the gas sensor may also be configured to prevent liquid water from entering the chamber when liquid water is subjected to a pressure of 1000 Pa or less.

The gas sensors reference gas aperture may be one of a plurality of reference gas apertures extending through the metal material from the outer surface to the inner surface such that each of the plurality of reference gas apertures may be configured to permit the reference gas to flow into the chamber while preventing liquid water from entering the chamber.

The gas sensor may comprise: a sensing element having an electrochemical cell comprising a solid electrolyte layer disposed between a sensing electrode and a reference electrode, the sensing element also having a reference gas channel in fluid communication with the reference electrode; a chamber such that the sensing electrode and the reference electrode are located outside of the chamber and the reference gas channel being in fluid communication with the chamber which provides fluid communication from the chamber to the reference electrode; and a shield made of a metal material, the shield having an inner surface and an outer surface, the shield also having a reference gas aperture extending through the metal material from the outer surface to the inner surface such that the reference gas aperture is configured to permit a reference gas to flow into the chamber while preventing liquid water from entering said chamber.

The gas sensors reference gas channel may be located within the chamber.

The reference gas aperture of the gas sensor may be less than or equal to 1100 $\mu$m in diameter.

The reference gas aperture of the gas sensor may be less than or equal to 275 $\mu$m in diameter.

The gas sensor whereby the reference gas aperture may extend through the metal material along an axis and the reference gas aperture may have a maximum width that is less than or equal to 1100 $\mu$m in a direction perpendicular to the axis.

The gas sensor whereby the maximum width may be less than or equal to 275 $\mu$m.

The reference gas aperture of the gas sensor may be configured to prevent liquid water from entering the chamber when liquid water is subjected to a pressure of 1000 Pa or less.

The reference gas aperture of the gas sensor may be one of a plurality of reference gas apertures extending through the metal material from the outer surface to the inner surface such that each of the plurality of reference gas apertures may be configured to permit the reference gas to flow into the chamber while preventing liquid water from entering the chamber.

Further features and advantages of the invention will appear more clearly on a reading of the following detailed description of the preferred embodiment of the invention, which is given by way of non-limiting example only and with reference to the accompanying drawings.

## BRIEF DESCRIPTION OF DRAWINGS

This invention will be further described with reference to the accompanying drawings in which:

FIG. 1 is an axial cross-sectional view of a gas sensor in accordance with the present invention;

FIG. 2 is an enlarged axial cross-sectional view of a glass holder and a shell of the gas sensor in accordance with the present invention prior to projection welding the glass holder to the shell;

FIG. 3 is a variation of FIG. 2;

FIG. 4 is an enlarged axial cross-sectional view showing a portion of the gas sensor and a glass preform that is used to form a glass seal in the gas sensor in accordance with the present invention;

FIG. 5 is an enlarged axial cross-sectional view of an upper shield and a shell of the gas sensor in accordance with the present invention prior to projection welding the upper shield to the shell;

FIG. 6 is a variation of FIG. 5;

FIG. 7 is an exploded isometric schematic view of a sensing element of a sensing element of the gas sensor in accordance with the present invention;

FIG. 8 is a cross-sectional schematic view of the sensing element of FIG. 7;

FIGS. 9 and 10 are enlargements of circles IX and X respectively from FIG. 1 showing reference gas apertures; and

FIG. 11 is a face-on view of one of the reference gas apertures of FIGS. 9 and 10.

## DETAILED DESCRIPTION OF INVENTION

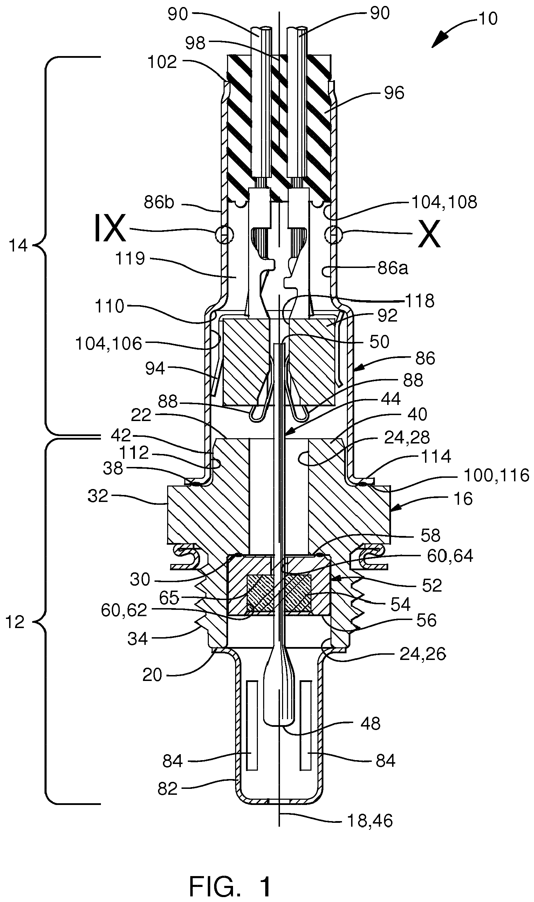

In accordance with a preferred embodiment of this invention and referring to FIG. 1, a gas sensor 10 is shown which generally includes a sensing subassembly 12 and an electrical harness subassembly 14. Gas sensor 10 is arranged to sense concentrations of exhaust gas species in an exhaust stream 11, by way of non-limiting example only, oxygen concentration levels of exhaust gases in an exhaust conduit (not shown) of an internal combustion engine (not shown).

Sensing subassembly 12 includes a metallic shell 16 which may be made of, for example only, 400 series stainless steel and which extends along a shell axis 18 from a shell first end 20 that is distal from electrical harness subassembly 14 to a shell second end 22 that is proximal to electrical harness subassembly 14.

A shell aperture 24 extends axially through shell 16 from shell first end 20 to shell second end 22 such that shell aperture 24 is centered about shell axis 18. Shell aperture 24 includes a shell aperture first section 26 which extends part way into shell 16 from shell first end 20 and a shell aperture second section 28 which extends from shell aperture first section 26 to shell second end 22. Shell aperture first section 26 is larger in diameter than shell aperture second section 28, consequently, a shell shoulder 30 is defined where shell aperture first section 26 meets shell aperture second section 28 such that shell shoulder 30 is substantially perpendicular to shell axis 18.

A shell flange 32 extends radially outward from shell 16. Shell flange 32 may aid in mounting gas sensor 10 to the exhaust conduit and may also aid in attaching electrical harness subassembly 14 to shell 16 as will be described in greater detail later. The outer perimeter of shell 16 between shell first end 20 and shell flange 32 may be provided with external threads 34 which may be used to mate with corresponding internal threads (not shown) of the exhaust conduit for mounting gas sensor 10 to the exhaust conduit. The outer perimeter of shell flange 32 may be a hex-shape in order to facilitate engagement by a tool that is used to rotate shell 16 when mating external threads 34 with the internal threads of the exhaust conduit. The side of shell flange 32 that is proximal to shell second end 22 defines a shell attaching surface 38 that lies in a plane that is substantially perpendicular to shell axis 18. A shell extension 40 may extend axially away from shell flange 32 to shell second end 22. Shell extension 40 is cylindrical and centered about shell axis 18, thereby defining an external diameter 42.

Sensing subassembly 12 also includes a ceramic sensing element 44 which extends along a sensing element axis 46 from a sensing element sensing end 48 to a sensing element terminal end 50. As shown in FIG. 1, sensing element axis 46 is coincident with shell axis 18; however, sensing element axis 46 may not be coincident with shell axis 18 due to manufacturing tolerances and variations. Sensing element 44 may be any cross-sectional shape (as sectioned perpendicular to sensing element axis 46), however, may preferably be rectangular in cross-sectional shape. Sensing element sensing end 48 is exposed, in use, to the gas being sensed while sensing element terminal end 50 is fluidly isolated from the gas being sensed as will be described in greater detail later. Sensing element terminal end 50 may be fluidly isolated from sensing element sensing end 48 in order for sensing element terminal end 50 to be exposed to an air reference zone. Sensing element 44 is rigidly fixed to shell 16 at a first axial location of sensing element 44 as will be describe in greater detail in the paragraphs that follow.

In order to fluidly isolate sensing element terminal end 50 from sensing element sensing end 48 and to rigidly fix sensing element 44 to shell 16, sensing subassembly 12 includes a metallic glass holder 52 and a glass seal 54. Glass holder 52 is cylindrical and extends axially from a glass holder first end 56 to a glass holder second end 58. A glass holder aperture 60 extends axially through glass holder 52 and includes a glass holder aperture first section 62 which extends part way into glass holder 52 from glass holder first end 56 and a glass holder aperture second section 64 which extends from glass holder aperture first section 62 to glass holder second end 58. Glass holder aperture first section 62 is larger in cross-sectional area (as sectioned perpendicular to shell axis 18) than the cross-sectional area of glass holder aperture second section 64 (as sectioned perpendicular to shell axis 18), consequently, a glass holder shoulder 65 is defined where glass holder aperture first section 62 meets glass holder aperture second section 64. Glass holder aperture first section 62 may be cylindrical while glass holder aperture second section 64 may be shaped to match the cross-sectional shape of sensing element 44. Glass holder aperture second section 64 is sized to surround sensing element 44 sufficiently close to accommodate the forming of glass seal 54 as will be described in greater detail later.

Glass holder 52 may be sized to fit within shell aperture first section 26 in a slip fit interface such that glass holder 52 can be inserted into shell aperture first section 26 substantially uninhibited while substantially preventing radial movement of glass holder 52 within shell aperture first section 26. In order to prevent gases from migrating past shell aperture first section 26 between metallic glass holder 52 and shell aperture first section 26, glass holder 52 is metallurgically sealed to shell 16. As shown in the figures, glass holder 52 is metallurgically sealed to shell 16 at an axial interface between glass holder 52 and shell shoulder 30. In a preferred embodiment, glass holder 52 is metallurgically sealed to shell 16 by welding, and even more preferably by projection welding as will be described in greater detail in the paragraphs that follow.

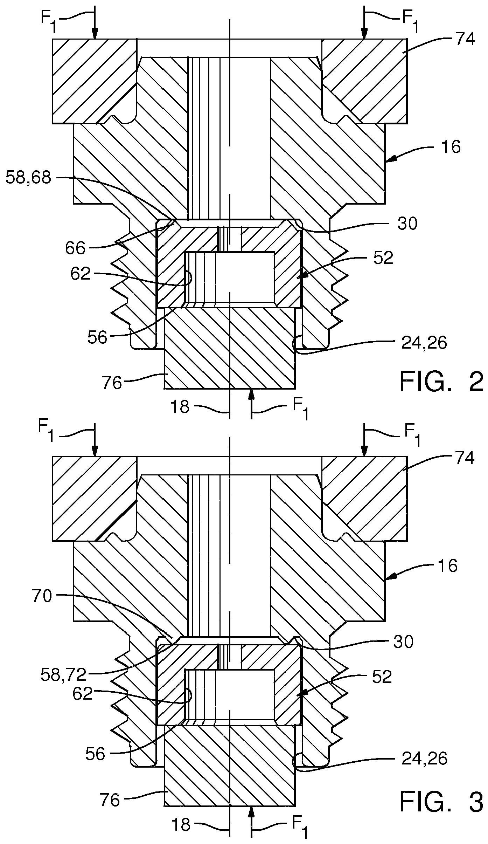

Referring now to FIGS. 2 and 3, in order to facilitate projection welding glass holder 52 to shell 16, either glass holder 52 or shell 16 includes a projection. As shown in FIG. 2, glass holder 52 (shown prior to being projection welded to shell 16) is provided with a projection 66 which is annular in shape and which comes to a point 68. Also as shown in FIG. 2, projection 66 may be defined at glass holder second end 58. Since projection 66 and glass holder aperture first section 62 are formed on opposite sides of glass holder 52, such an arrangement may be particularly conducive of manufacturing glass holder 52 by powder metal process or metal injection molding where powder metal is shaped in a mold and subsequently sintered in order to bind the particles of metal together. However, if glass holder 52 is desired to be made by machining from solid stock, projection 66 may be moved to glass holder first end 56 which allows projection 66 to be formed on the same side of glass holder 52 as glass holder aperture first section 62 which may be more desirable when machining glass holder 52 from solid stock. If projection 66 is formed on the same side of glass holder 52 as glass holder aperture first section 62, then glass holder 52 needs to be oriented in shell aperture first section 26 such that that glass holder first end 56 faces shell shoulder 30. Alternatively, as shown in FIG. 3, projection 66 is omitted from glass holder 52 and shell shoulder 30 is provided with a projection 70 which is annular in shape and which comes to a point 72.

In order to complete the projection weld between glass holder 52 and shell 16, a first welding electrode 74 is applied to shell 16 while a second welding electrode 76 is applied to glass holder 52 and projection 66 is place in contact with shell shoulder 30 (FIG. 2) or projection 70 is brought into contact with glass holder 52 (FIG. 3). Next, an electric current is passed between first welding electrode 74 and second welding electrode 76, consequently passing the electric current through shell 16 and glass holder 52. A compressive force is applied to projection 66 or projection 70 simultaneously with the passing of electric current through shell 16 and glass holder 52. The compressive force may be applied to projection 66 or projection 70 through one or both of first welding electrode 74 and second welding electrode 76 as represented by arrows $F_1$. The electric current produces heat at projection 66 or projection 70 and the compressive force collapses projection 66 or projection 70, thereby metallurgically sealing glass holder 52 to shell 16. Projection 66 or projection 70 may be collapsed by about 80% of the original height (in the direction of shell axis 18).

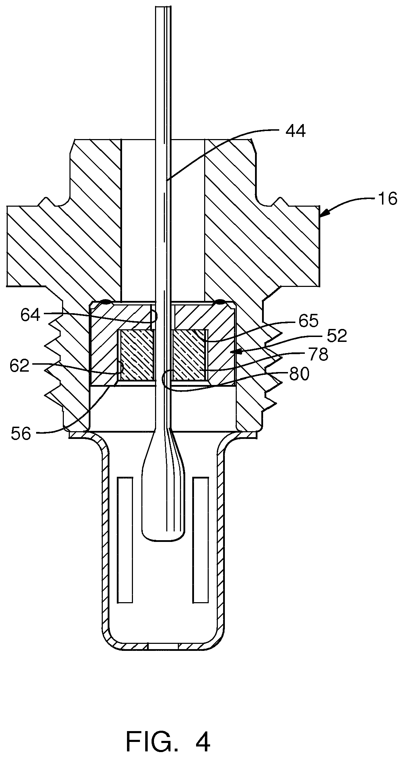

Now with reference to FIGS. 1 and 4, in order to form glass seal 54, a glass preform 78 is provided which includes a glass preform aperture 80 extending therethrough. Glass preform 78 is sized to be received within glass holder aperture first section 62 and glass preform aperture 80 is sized to receive sensing element 44 therethrough. Preferably, sensing element 44 is inserted into glass preform aperture 80 and then glass preform 78 is disposed in glass holder aperture first section 62 such that sensing element 44 extends through glass holder aperture second section 64, however, it should now be understood that sensing element 44 may first be disposed within glass holder aperture second section 64 and then glass preform 78 may next be disposed within glass holder aperture first section 62 such that sensing element 44 extends through glass preform aperture 80. After sensing element 44 is positioned at the desired axial position relative to shell 16, glass preform 78 is heated to a sufficiently high temperature to allow glass preform 78 to become molten glass and flow and conform to sensing element 44, glass holder aperture first section 62, and glass holder shoulder 65. Glass preform 78 may be heated, by way of non-limiting example only, by an induction heating coil (not shown) that radially surrounds shell 16. It should be noted that the clearance between sensing element 44 and glass holder aperture second section 64 is sufficiently small in order to prevent glass preform 78 from escaping between sensing element 44 and glass holder aperture second section 64 when glass preform 78 is heated to allow it to flow. After allowing the molten glass to cool, thereby forming glass seal 54, glass seal 54 forms a hermetic seal with glass holder 52 and sensing element 44. The material of glass seal 54 is selected to be compatible with the high temperature environment that glass seal 54 will be exposed to in use. Glass seal 54 preferably has a coefficient of thermal expansion that is less than the coefficient of thermal expansion of glass holder 52.

Again with reference to FIG. 1, sensing subassembly 12 also includes a lower shield 82 which protects sensing element 44 from damage during installation of gas sensor 10 to the exhaust conduit and from damage during operation due high exhaust gas velocities and particulate that may be present in the exhaust gas. Lower shield 82 is made of metal, preferably stainless steel, and may be made, for example, by deep drawing. Lower shield 82 includes a plurality of lower shield louvers 84 therethrough in order to allow the gas to be sensed to be communicated to sensing element sensing end 48. Lower shield 82 may be attached to shell first end 20, for example, by crimping or welding.

Electrical harness subassembly 14 includes an upper shield 86; a plurality of electrical terminals 88 each having a corresponding wire 90 extending therefrom and providing electrical communication between sensing element 44 and an electronic device as will be described in greater detail later; a connector body 92; a retainer 94; and a sealing member 96.

Upper shield 86 is made of a metal material and may be made of, for example only, 400 series stainless steel. Upper shield 86 extends along an upper shield axis 98 from an upper shield first end 100 that is proximal to shell 16 to an upper shield second end 102 that is distal from shell 16. Upper shield 86 is tubular, thereby defining an inner surface 86a which surrounds upper shield axis 98 and an outer surface 86b which surrounds upper shield axis 98.

An upper shield aperture 104 extends axially through upper shield 86 from upper shield first end 100 to upper shield second end 102 such that upper shield aperture 104 is centered about upper shield axis 98. Upper shield aperture 104 includes an upper shield aperture first section 106 which extends part way into upper shield 86 from upper shield first end 100 and an upper shield aperture second section 108 which extends from upper shield aperture first section 106 to upper shield second end 102. Upper shield aperture first section 106 is larger in diameter than upper shield aperture 104, consequently an upper shield shoulder 110 is defined where upper shield aperture first section 106 meets upper shield aperture 104. Upper shield aperture first section 106 defines an internal diameter 112 that radially surrounds shell extension 40 such that internal diameter 112 is larger than external diameter 42, the importance of which will be made readily apparent later.

An upper shield flange 114 extends radially outward from upper shield 86 at upper shield first end 100. The side of upper shield flange 114 that faces toward shell 16 defines an upper shield attaching surface 116 that is substantially perpendicular to upper shield axis 98. Upper shield flange 114 is used to attach electrical harness subassembly 14 to shell 16 as will be described in greater detail later.

Connector body 92 is made of an electrically insulative material, for example ceramic, and includes a connector body aperture 118 that extends through connector body 92 in the same general direction as upper shield axis 98. Connector body 92 is configured to hold electrical terminals 88 such that electrical terminals 88 extend into connector body aperture 118.

Retainer 94 may be made of metal and radially surrounds connector body 92. Retainer 94 grips the outer perimeter of connector body 92 and has features which are elastically deformed when retainer 94 and connector body 92 are inserted into upper shield aperture first section 106 until retainer 94 reaches upper shield shoulder 110. Consequently, retainer 94 prevents movement of connector body 92 within upper shield 86. It should be noted that retainer 94 may hold connector body 92 in such a way that connector body aperture 118 and electrical terminals 88 may not be centered about shell axis 18 or upper shield axis 98.

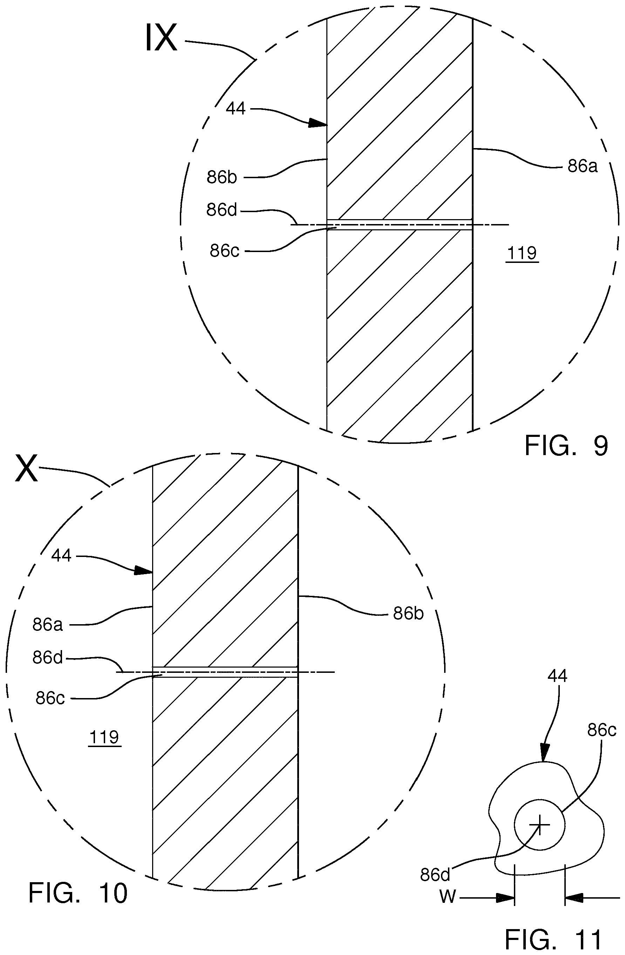

Sealing member 96 is preferably made from an elastomeric material and is disposed within upper shield aperture second section 108. Consequently, a chamber 119 is formed within upper shield 86 axially between sealing member 96 and shell second end 22 as best seen in FIG. 1. Wires 90 pass through sealing member 96 such that each wire 90 is individually sealed with sealing member 96. Upper shield 86 may be radially crimped around sealing member 96, thereby allowing sealing member 96 to prevent intrusion of water and other contaminants from entering upper shield 86. Upper shield 86 includes one or more upper shield reference gas apertures 86c, best shown in FIGS. 9 and 10, extending through the metal material of upper shield 86 from outer surface 86b to inner surface 86a along a reference gas aperture axis 86d. Upper shield reference gas apertures 86c provide an inlet for a reference gas, preferably atmospheric air, to chamber 119 for use by sensing element 44 as will be described in greater detail later together with a comprehensive description of upper shield reference gas apertures 86c. It should be noted that upper shield reference gas apertures 86c as shown in the figures may be exaggerated in scale for clarity.

Sensing element terminal end 50 is received within connector body aperture 118 such that sensing element terminal end 50 elastically displaces electrical terminals 88 in order to provide reliable electrical contact with mating terminals (not shown) on sensing element 44. In this way, sensing element 44 is laterally supported by upper shield 86 at a second axial location of sensing element 44 that is axially apart from the axial location where sensing element 44 is rigidly fixed to shell 16.

Due to manufacturing tolerances and variations, shell axis 18, sensing element axis 46, and upper shield axis 98 may not always be coincident to one another. Consequently, if upper shield 86 is fixed to shell 16 in a concentric relationship such that shell axis 18 is coincident with upper shield axis 98, stress may be placed laterally on sensing element 44. In order to minimize or eliminate lateral stress on sensing element 44, upper shield 86 is attached to shell 16 using upper shield attaching surface 116 and shell attaching surface 38. Since upper shield attaching surface 116 is substantially perpendicular to upper shield axis 98 and shell attaching surface 38 is substantially perpendicular to shell axis 18, misalignment between upper shield axis 98 and shell axis 18 is accommodated while still allowing upper shield attaching surface 116 and shell attaching surface 38 to be joined together as will be described below. As described previously, internal diameter 112 of upper shield aperture first section 106 is larger than external diameter 42 of shell extension 40. This relationship accommodates the necessary misalignment between upper shield axis 98 and shell axis 18. Of course, the magnitude of allowable misalignment between upper shield axis 98 and shell axis 18 is determined by the difference in size between internal diameter 112 of upper shield aperture first section 106 and external diameter 42 of shell extension 40. Consequently, the difference in size between internal diameter 112 of upper shield aperture first section 106 and external diameter 42 of shell extension 40 is preferably designed to accommodate the maximum amount of misalignment between upper shield axis 98 and shell axis 18 that would be necessary to allow insertion of sensing element 44 into connector body aperture 118 while applying no lateral stress or an acceptable magnitude of lateral stress to sensing element 44.

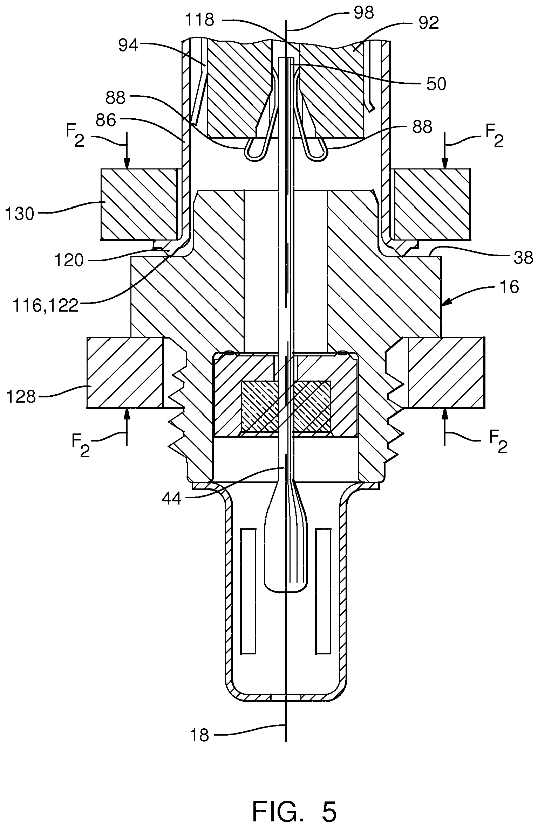

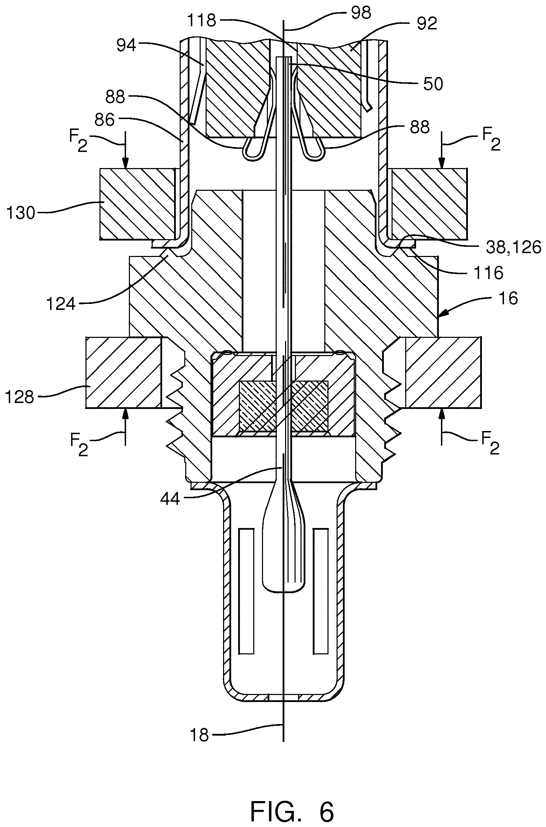

Referring now to FIGS. 5 and 6, a method will now be described for attaching upper shield 86 to shell 16. Prior to attaching upper shield 86 to shell 16; sensing element 44 is already rigidly fixed to shell 16 as described above. Also prior to attaching upper shield 86 to shell 16, electrical terminals 88, wires 90, connector body 92, retainer 94, and sealing member 96 are positioned within upper shield 86 as described above. Next, sensing element terminal end 50 is inserted into connector body aperture 118, thereby elastically displacing electrical terminals 88 and making electrical contact between electrical terminals 88 and sensing element 44. Sensing element terminal end 50 is inserted into connector body aperture 118 until upper shield attaching surface 116 contacts shell attaching surface 38. The relative position of upper shield axis 98 and shell axis 18 is allowed to be determined by sensing element 44 and electrical terminals 88, thereby preventing excessive lateral stress from being applied to sensing element 44 by upper shield 86 which now laterally supports sensing element 44. After sensing element 44 and electrical terminals 88 determine the relative position of upper shield axis 98 and shell axis 18, upper shield 86 is attached to shell 16 at an interface formed between upper shield attaching surface 116 and shell attaching surface 38, for example, by metallurgical bonding. Projection welding may be used in a preferred embodiment of attaching upper shield 86 to shell 16 at an interface formed between upper shield attaching surface 116 and shell attaching surface 38. As shown in FIG. 5 upper shield attaching surface 116 is further defined by an annular projection 120 which extends axially from upper shield flange 114 toward shell attaching surface 38 and comes to a point 122. Alternatively, as shown in FIG. 6, projection 120 is omitted from upper shield flange 114 and shell attaching surface 38 is further defined by an annular projection 124 which extends axially from shell flange 32 toward upper shield 86 and comes to a point 126.

In order to complete the projection weld between upper shield 86 and shell 16, a third welding electrode 128 is applied to shell 16 while a fourth welding electrode 130 is applied to upper shield 86 and projection 120 is placed in contact with shell attaching surface 38 (FIG. 5) or projection 124 is brought into contact with upper shield attaching surface 116 (FIG. 6). Next, an electric current is passed between third welding electrode 128 and fourth welding electrode 130, consequently the electric current passes through shell 16 and upper shield 86. A compressive force is applied to projection 120 or projection 124 simultaneously with the passing of electric current through shell 16 and upper shield 86. The compressive force may be applied to projection 120 or projection 124 through one or both of third welding electrode 128 and fourth welding electrode 130 as represented by arrows $F_2$. The electric current produces heat at projection 120 or projection 124 and the compressive force collapses projection 120 or projection 124, thereby metallurgically boding upper shield 86 to shell 16. Projection 120 or projection 124 may be collapsed by about 80% of the original height (in the direction of upper shield axis 98).

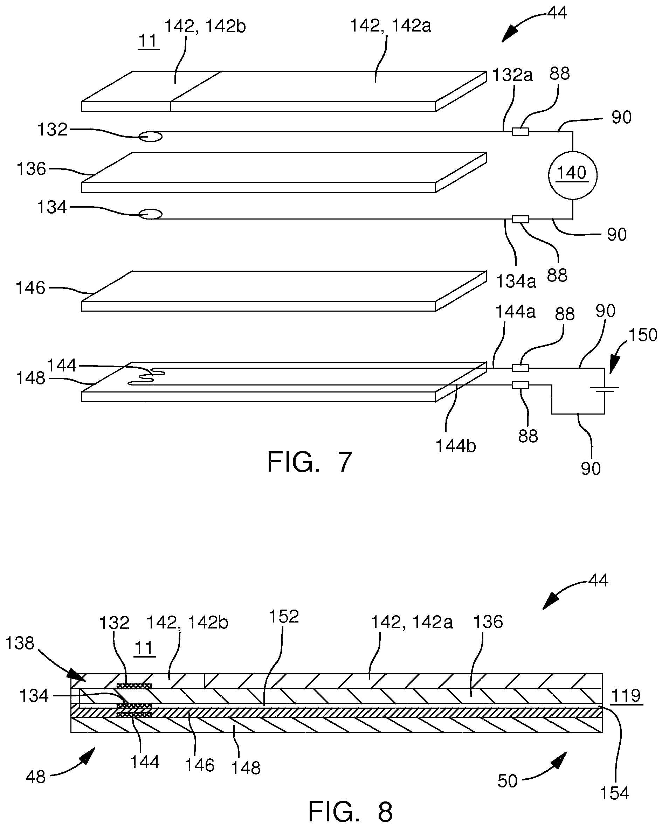

Sensing element 44 will now be described in greater detail with particular reference to FIGS. 7 and 8. Sensing element 44 includes a sensing electrode 132 and a reference electrode 134 such that a first solid electrolyte layer 136 is disposed between sensing electrode 132 and reference electrode 134 and such that reference electrode 134 is in contact with one side of first solid electrolyte layer 136 while reference electrode 134 is disposed in contact with another side of first solid electrolyte layer 136 that is opposed to the first side of first solid electrolyte layer 136 with which reference electrode 134 is in contact. Sensing electrode 132, reference electrode 134, and first solid electrolyte layer 136 together define an electrochemical cell 138. Sensing electrode 132 includes a sensing electrode lead 132a which is in electrical communication with sensing electrode 132 and which is a first input to a volt meter 140 (shown only in Fig. 1) via one respective electrical terminal 88 and one respective wire 90 while reference electrode 134 similarly includes a reference electrode lead 134a which is in electrical communication with reference electrode 134 and which is a second input to volt meter 140 via one respective electrical terminal 88 and one respective wire 90.

Sensing element 44 also includes a first protective insulating layer 142 on the side of sensing electrode 132 that is opposite first solid electrolyte layer 136. First protective insulating layer 142 includes a dense section 142a and a porous section 142b such that porous section 142b enables fluid communication between sensing electrode 132 and exhaust stream 11, thereby allowing sensing electrode 132 to be exposed to exhaust stream 11.

Sensing element 44 also includes a heater 144 disposed in thermal communication with electrochemical cell 138 so as to maintain electrochemical cell 138 at a desired operating temperature, which may be, by way of non-limiting example only, in the range of about 600° C to about 800° C. Heater 144 is disposed between, and in contact with a second protective insulating layer 146 and a third protective insulating layer 148 such that second protective insulating layer 146 is on the side of heater 144 that faces toward reference electrode 134 and such that third protective insulating layer 148 is on the side of heater 144 that faces away from reference electrode 134. Heater 144 includes a positive heater lead 144a which is in electrical communication with heater 144 and which is electrically connected to a positive terminal of a power source 150 via one respective electrical terminal 88 and one respective wire 90 and also includes a negative heater lead 144b which is in electrical communication with heater 144 and which is electrically connected to a negative terminal of power source 150 via one respective electrical terminal 88 and one respective wire 90. Heater 144 may comprise, by way of non-limiting example only, platinum, alumina, palladium, and the like, as well as mixtures and alloys comprising at least one of the foregoing metals or any other conventional heater. Heater 144 may be formed, by way of non-limiting example only, by screen printing the material onto third protective insulating layer 148 to a thickness of about 5 microns to about 50 microns where positive heater lead 144a and negative heater lead 144b may be formed simultaneously with heater 144.

A reference gas channel 152 is defined between first solid electrolyte layer 136 and second protective insulating layer 146 such that reference gas channel 152 receives a reference gas through a port 154 which is in fluid communication with chamber 119, and as shown, may be within chamber 119. Furthermore, reference gas channel 152 is defined in part by first solid electrolyte layer 136 and second protective insulating layer 146. The reference gas is atmospheric air which as used herein is the air found in Earth's atmosphere which has an understood substantially constant concentration of about 21% oxygen. Reference gas channel 152 extends to reference electrode 134, thereby providing reference electrode 134 with a constant supply of fresh air, and consequently also providing reference electrode 134 with a constant concentration of oxygen.

First protective insulating layer 142, second protective insulating layer 146, and third protective insulating layer 148 comprise, by way of non-limiting example only, a dielectric material such as alumina and the like and may be formed using, by way of non-limiting example only, ceramic tape casting methods, plasma spray deposition techniques, screen printing, and stenciling. The thickness of first protective insulating layer 142, second protective insulating layer 146, and third protective insulating layer 148 may be between about 50 microns and about 200 microns and provide one or more of the following characteristics: protection of various elements of sensing element 44 from abrasion, vibration, and the like, physical strength to sensing element 44, physically separation of various elements of sensing element 44, and providing electrical isolation between various elements of sensing element 44.

First solid electrolyte layer 136 may be made of any material that is capable of permitting the electrochemical transfer of oxygen ions while inhibiting the physical passage of exhaust gases, has an ionic/total conductivity ratio of approximately unity, and is compatible with the environment in which gas sensor 10 will be utilized (e.g. up to about 1,000° C). Possible materials for first solid electrolyte layer 136 can comprise any material conventionally employed as sensor electrolytes which include, by way of non-limiting example only, zirconia which may optionally be stabilized with calcium, barium, yttrium, magnesium, aluminum, lanthanum, cesium, gadolinium, and the like as well as combination comprising at least one of the foregoing. For example, first solid electrolyte layer 136 can be aluminum and yttrium stabilized zirconia. First solid electrolyte layer 136 may be formed via many conventional processes, e.g. die pressing, roll compaction, stenciling, screen printing, tape casting techniques, and the like, and have a thickness of about 25 microns to about 500 microns.

As should now be readily apparent, the thicknesses of the various layers and, channels are greatly exaggerated in the figures in order to provide clarity. Furthermore, it should be noted that FIG. 7 does not illustrate reference gas channel 152 which is formed by fugitive material, for example a carbon material such as carbon black, applied during the build-up of the various layers of sensing element 44 where the fugitive material is subsequently burned out during firing of sensing element 44.

Sensing electrode 132 and reference electrode 134 can comprise any catalyst capable of ionizing oxygen, including, but not limited to metals such as platinum, palladium, osmium, rhodium, iridium, gold, and ruthenium; metal oxides such as zirconia, yttria, ceria, calcia, alumina and the like; other materials such as silicon and the like; and mixtures and alloys comprising at least one of the foregoing catalysts. Sensing electrode 132 and reference electrode 134 can be formed using conventional techniques including sputtering, chemical vapor deposition, or screen printing, among others. If a co-firing process is employed for the formation of gas sensor 10, screen printing the electrodes onto appropriate tapes is preferred due to simplicity, economy, and compatibility with the co-fired process.

As described previously, upper shield reference gas apertures 86c provide an inlet for air to chamber 119 for use by sensing element 44. In addition to allowing air into chamber 119, upper shield reference gas apertures 86c also function to prevent liquid water from entering chamber 119 since water may compromise the function of sensing element 44. Consequently, upper shield reference gas apertures 86c are sized to prevent liquid water from passing therethrough. The ability for liquid water to pass through upper shield reference gas apertures 86c is dependent on the surface tension of the liquid water and the differential pressure between the area outside of upper shield 86 and chamber 119. Depending on the application of gas sensor 10, the size requirement of upper shield reference gas apertures 86c may be different in order to accommodate different differential pressures between the area outside of upper shield 86 and chamber 119 expected to be experienced for the particular application of gas sensor 10. For example, a gas sensor 10 that is designed for use in a vehicle that is primary used on-road may have a less stringent requirement for water intrusion into chamber 119 than a gas sensor 10 that is designed for use in a vehicle that may be subject to off-road use, including high levels of water impingement or water submersion which may be encountered by fording a stream. However, the inventors have discovered that the diameter of upper shield reference gas apertures 86c is less than or equal to about 1100 μm (microns) in order to prevent entry of water into chamber 119 for the least stringent applications and is preferably less than or equal to about 275 μm in order to prevent entry of water into chamber 119 for more stringent applications. Since upper shield reference gas apertures 86c are circular in the embodied example, upper shield reference gas apertures 86c have a maximum width W in a direction perpendicular to reference gas aperture axis 86d which is equal to the diameter of upper shield reference gas apertures 86c. While upper shield reference gas apertures 86c have been illustrated herein as having a cross-sectional shape of a circle when cut by a plane that is perpendicular to reference gas aperture axis 86d, it should be understood that other cross-sectional shapes are anticipated. When a different cross-sectional shape is utilized, the maximum width of upper shield reference gas apertures 86c perpendicular to reference gas aperture axis 86d is less than or equal to about 1100 μm and is preferably less than or equal to about 275 μm. The size of upper shield reference gas apertures 86c may also be characterized in terms of the ability of upper shield reference gas apertures 86c to prevent liquid water from passing through upper shield reference gas apertures 86c under given conditions. For example, upper shield reference gas apertures 86c are sized to prevent liquid water from passing therethrough when the liquid water is subjected to a pressure of 100 Pa or less for the least stringent applications and are sized to prevent liquid quarter from passing therethrough when the liquid water is subjected to a pressure of 1000 Pa or less for more stringent applications. This pressure may be the result of a pressurized spray of water, may result from a vacuum generated within chamber 119 resulting from cooling of gas sensor 10 after the internal combustion engine with which gas sensor 10 is associated has ceased operation, or may result from head pressure due to full submersion in liquid water, i.e. pressure based on the depth within the water upper shield reference gas apertures 86c are located.

While two upper shield reference gas apertures 86c are visible in the figures which are diametrically opposed, it should be understood that the number of upper shield reference gas apertures 86c will need to be selected to provide sufficient flow of air into chamber 119 to support the operation of sensing element 44. One of ordinary skill in the art will be able to determine the number of upper shield reference gas apertures 86c that are needed to support the operation of sensing element 44 based on the flow rate needed to support the operation of sensing element 44 and the flow rate that each upper shield reference gas aperture 86c is able to provide. Furthermore, the number of upper shield reference gas apertures 86c may be increased above the minimum number needed to support operation of sensing element 44 in order to provide additional flow capacity in the event one or more upper shield reference gas apertures 86c becomes obstructed, for example, with foreign matter during the service live of gas sensor 10. While upper shield reference gas apertures 86c have been shown as being spaced equally around the circumference of upper shield 86, it should be understood that an unequal spacing is also anticipated.

Upper shield reference gas apertures 86c may preferably be formed in upper shield 86 using a laser (not shown). The laser is pulsed with sufficient power to cause the metal of upper shield 86 to become molten and a pressurized gas is directed so as to displace the molten metal, thereby forming each upper shield reference gas aperture 86c. The inventors have discovered that pulsing the laser from 0 watts to $2.00 \times 10^7$ watts and back to 0 watts in a time period of 4 ms (milliseconds) at a constant rate and continuing this pulsing for a total of 40 ms is sufficient to form upper shield reference gas apertures 86c. After forming upper shield reference gas apertures 86c with the use of a laser, it may be necessary to subject upper shield 86 to a corrosion inhibiting process which may include subjecting to upper shield 86 to a corrosion resistant bath in order to prevent corrosion at upper shield reference gas apertures 86c which could lead to plugging of upper shield reference gas apertures 86c. One example of a corrosion resistant bath is combination of deionized water together with SurTec 089 and SurTec 138, both of which are available from SurTec Inc. of Brunswick, Ohio, USA. SurTec 089 and SurTec 138 are alkaline cleaners with some corrosion resistant properties where 5% SurTec 089 by volume and 0.5% SurTec 138 by volume is combined with deionized water to produce the corrosion resistant bath.

In order to further reduce the potential for liquid water to enter upper shield reference gas apertures 86c, upper shield 86 may include a hydrophobic coating in the areas surrounding upper shield reference gas reference apertures 86c. An example of a suitable hydrophobic coating may include Dow Corning® 3-1965 Conformal Coating available from Dow Corning® Corporation, Midland, Michigan, USA. Other suitable hydrophobic coatings are also commercially available. Without being bound by theory, the Inventors believe that providing a hydrophobic coating in the areas surrounding upper shield reference gas reference apertures 86c may help to reduce water wetting with upper shield 86 and also increase the surface tension of liquid water, thereby reducing the propensity for water to penetrate through upper shield reference gas apertures 86c. Furthermore, as an alternative to using a hydrophobic coating, a pattern of microscale and nanoscale structures applied by laser may be provided in the areas surrounding upper shield reference gas reference apertures 86c in order to produce a hydrophobic effect.

In operation, sensing element sensing end 48 is exposed to a gas to be sensed, which in this non-limiting example, is exhaust stream 11 of an internal combustion engine. Electrical power is supplied to heater 144 from power source 150, for example, at 13.5 V, thereby causing heater 144 to generate heat which is transferred to electrochemical cell 138. Sensing electrode 132 is exposed to exhaust stream 11 while reference electrode 134 is exposed to atmospheric air provided through upper shield reference gas apertures 86c, chamber 119, and reference gas channel 152. When electrochemical cell 138 is warmed sufficiently by heat from one or more of heater 144 and exhaust stream 11, for example to a temperature greater than or equal to about 600° C, ionic oxygen is able to flow across first solid electrolyte layer 136, and an electromotive force is generated per the Nernst equation, which varies based on the concentration of oxygen supplied to sensing electrode 132 which is dependent upon the concentration of oxygen in exhaust stream 11. Consequently, volt meter 140 can be used to monitor the voltage between sensing electrode 132 and reference electrode 134 in order to determine the oxygen concentration in exhaust stream 11 which may be useful, by way of non-limiting example only, for controlling and diagnosing the internal combustion engine which produces exhaust stream 11 or for controlling or diagnosing devices which are provided for purifying exhaust stream 11 before it is released to the atmosphere.

Gas sensor 10 with upper shield reference gas apertures 86c as described herein allows for air to be reliably supplied to chamber 119 for use by sensing element 44 while preventing water from being supplied to chamber 119 without the need for costly breathable membranes.

While this invention has been described in terms of preferred embodiments thereof, it is not intended to be so limited, but rather only to the extent set forth in the claims that follow.

**Claims**

1. A gas sensor (10) comprising:

   a sensing element (44) having an electrochemical cell (138) comprising a solid electrolyte layer (136) disposed between a sensing electrode (132) and a reference electrode (134), said sensing element (44) also having a reference gas channel (152) in fluid communication with said reference electrode (134);
   a shield (86) made of a metal material, said shield (86) being hollow such that a chamber (119) is located within said shield (86) and such that said shield (86) has an inner surface (86a) and an outer surface (86b), said sensing electrode (132) and said reference electrode (134) being located outside of said chamber (119) and said reference gas channel (152) being in fluid communication with said chamber (119) which provides fluid communication from said chamber (119) to said reference electrode (134), said shield (86) having a reference gas aperture (86c) extending through said metal material from said outer surface (86b) to said inner surface (86a) such that said reference gas aperture (86c) is configured to permit a refence gas to flow into said chamber (119) while preventing liquid water from entering said chamber (119).

2. A gas sensor (10) as in claim 1 wherein said reference gas channel (152) is located within said chamber (119).

3. A gas sensor (10) as in any preceding claims, wherein said reference gas aperture (86c) is less than or equal to 1100 $\mu$m in diameter.

4. A gas sensor (10) as in any preceding claims, wherein said reference gas aperture (86c) is less than or equal to 275 $\mu$m in diameter.

5. A gas sensor (10) as in any preceding claims, wherein said reference gas aperture (86c) extends through said metal material along an axis (86d) and said reference gas aperture (86c) has a maximum width that is less than or equal to 1100 $\mu$m in a direction perpendicular to said axis (86d).

6. A gas sensor (10) as in any preceding claims, wherein the maximum width is less than or equal to 275 $\mu$m.

7. A gas sensor (10) as in any preceding claims, wherein said reference gas aperture (86c) is configured to prevent liquid water from entering said chamber (119) when liquid water is subjected to a pressure of 1000 Pa or less.

8. A gas sensor (10) as in any preceding claims, wherein said reference gas aperture (86c) is one of a plurality of reference gas apertures (86c) extending through said metal material from said outer surface (86b) to said inner surface (86a) such that each of said plurality of reference gas aperture (86c)s are configured to permit the refence gas to flow into said chamber (119) while preventing liquid water from entering said chamber (119).

9. A gas sensor (10) comprising:

   a sensing element (44) having an electrochemical cell (138) comprising a solid electrolyte layer (136) disposed between a sensing electrode (132) and a reference electrode (134), said sensing element (44) also having a reference gas channel (152) in fluid communication with said reference electrode (134);

a chamber (119) such that said sensing electrode (132) and said reference electrode (134) are located outside of said chamber (119) and said reference gas channel (152) being in fluid communication with said chamber (119) which provides fluid communication from said chamber (119) to said reference electrode (134); and a shield (86) made of a metal material, said shield (86) having an inner surface (86a) and an outer surface (86b), said shield (86) also having a reference gas aperture (86c) extending through said metal material from said outer surface (86b) to said inner surface (86a) such that said reference gas aperture (86c) is configured to permit a refence gas to flow into said chamber (119) while preventing liquid water from entering said chamber (119).

10. A gas sensor (10) as in claim 9 wherein said reference gas channel (152) is located within said chamber (119).

11. A gas sensor (10) as in claims 9 and 10, wherein said reference gas aperture (86c) is less than or equal to 1100 $\mu$m in diameter.

12. A gas sensor (10) as in claims 9-11, wherein said reference gas aperture (86c) is less than or equal to 275 $\mu$m in diameter.

13. A gas sensor (10) as in claims 9-12, wherein said reference gas aperture (86c) extends through said metal material along an axis (86d) and said reference gas aperture (86c) has a maximum width that is less than or equal to 1100 $\mu$m in a direction perpendicular to said axis (86d).

14. A gas sensor (10) as in claims 9-13, wherein the maximum width is less than or equal to 275 $\mu$m.

15. A gas sensor (10) as in claims 9-14, wherein said reference gas aperture (86c) is configured to prevent liquid water from entering said chamber (119) when liquid water is subjected to a pressure of 1000 Pa or less

FIG. 1

FIG. 2

FIG. 3

FIG. 4

FIG. 5

FIG. 6

FIG. 7

FIG. 8

IX

44

86b

86d

86c

86a

_119_

FIG. 9

X

44

86a

86d

86c

86b

_119_

FIG. 10

44

86c

86d

W

FIG. 11

Europäisches
Patentamt

European
Patent Office

Office européen
des brevets

# EUROPEAN SEARCH REPORT

Application Number

EP 19 16 9524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 943 330 A (IINO ATSUSHI [JP] ET AL) 24 July 1990 (1990-07-24) * the whole document * ----- | 1-15 | INV. G01N27/407 |
| X | US 2003/150254 A1 (FUJITA YASUHIRO [JP] ET AL) 14 August 2003 (2003-08-14) * the whole document * ----- | 1-15 | |

TECHNICAL FIELDS
SEARCHED (IPC)

G01N

The present search report has been drawn up for all claims

| Place of search | Date of completion of the search | Examiner |
|---|---|---|
| Munich | 22 July 2019 | De Masi, Rita |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 19 16 9524

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2019

| Patent document cited in search report | | Publication date | Patent family member(s) | | Publication date |
|---|---|---|---|---|---|
| US 4943330 | A | 24-07-1990 | DE | 3780993 D1 | 17-09-1992 |
| | | | DE | 3780993 T2 | 04-03-1993 |
| | | | EP | 0238278 A1 | 23-09-1987 |
| | | | JP | H0640094 B2 | 25-05-1994 |
| | | | JP | S62214347 A | 21-09-1987 |
| | | | US | 4824548 A | 25-04-1989 |
| | | | US | 4943330 A | 24-07-1990 |
| US 2003150254 | A1 | 14-08-2003 | EP | 1324035 A2 | 02-07-2003 |
| | | | JP | 3935725 B2 | 27-06-2007 |
| | | | JP | 2003194765 A | 09-07-2003 |
| | | | US | 2003150254 A1 | 14-08-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6395159 B, Matsuo